# EUROPÄISCHE PATENTSCHRIFT

(11) **EP 0 529 415 B1**
(45) Veröffentlichungstag und Bekanntmachung des Hinweises auf die Patenterteilung: **08.05.1996**
(21) Anmeldenummer: 92113763.4
(22) Anmeldetag: 12.08.1992
(51) Int. Cl.: B62J 1/02

(54) **Sattelkonstruktion**
Saddle assembly
Selle

(30) Priorität: 22.08.1991 DE 4127804
(43) Veröffentlichungstag der Anmeldung: 03.03.1993
(73) Patentinhaber: S.M.P. SELLE S.A.S. DI MARTINO SCHIAVON & C., I-35020 Casalserugo (PD) (IT)
(72) Erfinder: Dado di, Giancarlo, Adami, I-20010 Pogliano Milanese (MI) (IT)
(74) Vertreter: Prüfer, Lutz H.

(56) Entgegenhaltungen:
- FR-A- 497 212
- FR-A- 645 887
- FR-A- 823 775
- GB-A- 199 714
- GB-A- 276 938

## Beschreibung

Die Erfindung bezieht sich auf eine Sattelkonstruktion nach dem Oberbegriff des Patentanspruches 1.

Eine derartige Sattelkonstruktion ist aus der FR-A-497 212 bekannt. Dort wird die Führung der Schwenkbewegung von Sattelgrundkörper und Sattel-Tragteil über eine Zunge vorgenommen, die zwischen zwei seitlichen Schenkein am Sattel-Tragteil geführt wird. Eine derartige Führung ermöglicht jedoch bei höheren Kippmomenten um die Längsachse der Sattelkonstruktion keine reibungsfreie Schwenkbewegung des Sattelgrundkörpers.

Aus der FR-A-645 887 ist eine Sattelkonstruktion bekannt, bei der eine Führung dadurch erfolgt, daß ein Bolzen in zwei Langlöchern am Sattelgrundkörper geführt ist. Da der Bolzen jedoch seinerseits an einer Blattfeder befestigt ist, ist eine exakte Führung mit dieser Konstruktion nicht möglich.

Der vorliegenden Erfindung liegt die Aufgabe zugrunde, eine einfach aufgebaute Sattelkonstruktion mit einer für sportlich orientierten Einsatz geeigneten Federung anzugeben, wobei auch unter Belastung mit nicht vertikalen und/oder nicht in der Symmetrieebene liegenden Kraftkomponenten eine gute Führung und Federung des Sattelgrundkörpers sichergestellt wird. Ferner soll die Sattelkonstruktion so aufgebaut sein, daß sie unter weitgehendem Einsatz von Kunststoff bei gleichzeitiger Einsparung von Stahl und Vermeidung umweltschädigender galvanischer Oberflächenbehandlungsschritte herstellbar ist.

Bei den bekannten Sätteln wird zudem eine Vielzahl von stabil aufzuführenden und aus Korrosionsschutz- und ästhetischen Gründen einer sorgfältigen und wenig umweltfreundlichen Oberflächenbehandlung zu unterziehenden stählernen Konstruktionsteilen benötigt.

Der vorliegenden Erfindung liegt daher die Aufgabe zugrunde, eine einfach aufgebaute Sattelkonstruktion mit einer für sportlich orientierten Einsatz geeigneten Federung anzugeben. Die Sattelkonstruktion soll so aufgebaut sein, daß sie unter weitgehendem Einsatz von Kunststoff bei gleichzeitiger Einsparung von Stahl und Vermeidung umweltschädigender galvanischer Oberflächenbehandlungsschritte herstellbar ist.

Der erfindungsgemäße Sattel weist die Merkmale des Patentanspruchs 1 auf. Zweckmäßige Ausgestaltungen der erfinderischen Lehre sind in den Unteransprüchen angegeben.

Die Hauptvorteile der angegebenen Sattelkonstruktion bestehen darin, daß die Federbewegung des Sattels seitlich geführt ist und damit wesentlich definierter erfolgt als bei üblichen Sätteln, daß die meisten Teile aus Kunststoff herstellbar sind und daß das Federelement witterungsgeschützt und kaum sichtbar angeordnet ist und daher aufwendige galvanische Behandlungen u. U. verzichtbar sind.

Weitere Merkmale und Zweckmäßigkeiten der Erfindung ergeben sich aus der Erläuterung von Ausführungsbeispielen anhand der Figuren. Von den Figuren zeigen
- Fig. 1: die seitliche Schnittdarstellung einer Ausführungsform,
- Fig. 2: eine perspektivische Explosionsarstellung des Sattels nach dieser Ausführungsform.
- Fig. 3: die seitliche Schnittdarstellung(Prinzipskizze) einer weiteren nicht beanspruchten Ausführungsform.

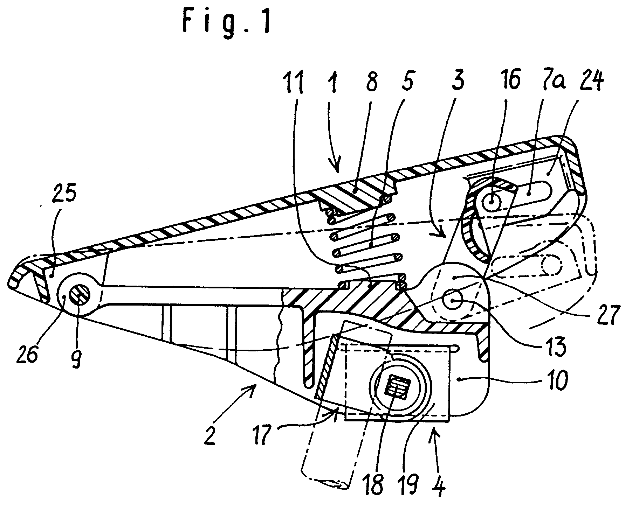

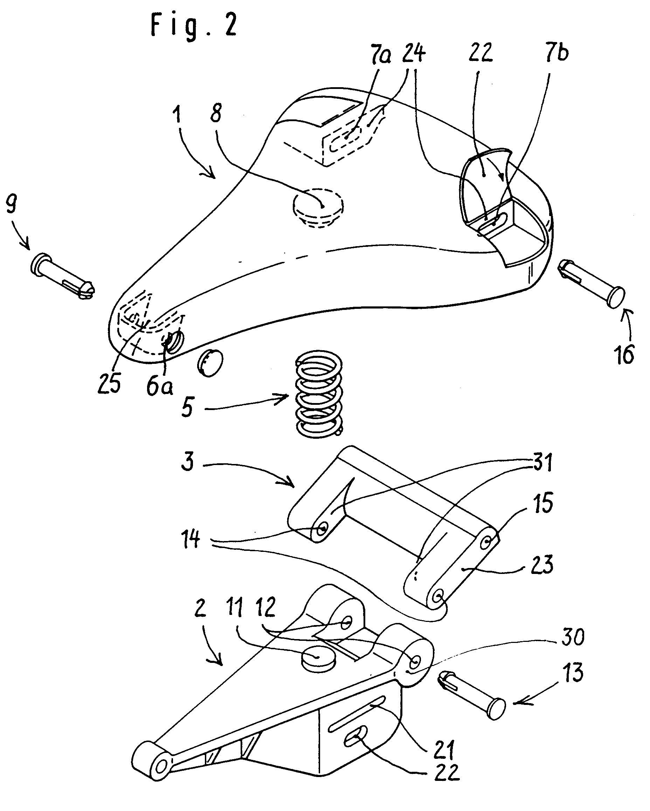

Wie Fig. 1 und 2 zeigen, besteht die Sattelkonstruktion nach einer ersten Ausführungsform aus den Hauptteilen Sattelgrundkörper 1, Sattel-Tragteil 2, Führungsteil 3, Sattelkloben 4 und Schraubenfeder 5 sowie den Verbindungs- und Schwenkachsen bzw. -stiften 9, 13 und 16.

Die Oberseite das Sattelgrundkörpers 1 bildet die Sitzfläche des Sattels und ist entsprechend ausgeformt. Das vordere, der üblichen Form eines Fahrradsattels entsprechend schmal zulaufende, Ende des Sattelgrundkörpers ist auf dessen Unterseite mit einer Ausnehmung 25 zur Aufnahme des vorderen Endes 26 des Sattel-Tragteiles 2 und mit einer zu einer Symmetrieebene des Sattels senkrechten Bohrung 6a zur Aufnahme der Achse 9, die Sattelgrundkörper 1 und Sattel-Tragteil 2 schwenkbar verbindet, versehen.

Im mittleren Bereich des Sattelgrundkörpers 1 trägt dieser auf seiner Unterseite einen angeformten flachen, abgestuften Zylinder 8 zur Aufnahme des oberen Endes der Schraubenfeder 5.

Am breiten hinteren Ende des Sattelgrundkörpers trägt dieser auf seiner Unterseite beidseitig je eine ausgeformte Stufe mit einer sich parallel zur Symmetrieebene der Sattelkonstruktion erstreckenden Wandung 24.

Innen zwischen die beiden Stufen wird das Führungsteil 3 so eingepaßt, daß seine ebenfalls zur Symetrieebene der Sattelkonstruktion parallelen Seitenwangen 23 in flächigem Kontakt mit den Wandungen 24 des Sattelgrundkörpers stehen.

In den Seitenwangen ist je ein sich in seiner Längsrichtung senkrecht zur ersten Achse 9 erstreckendes Langloch 7a bzw. 7b eingearbeitet, in das jeweils ein Stift bzw. eine Achse 16 zur Verbindung des Sattelgrundkörpers 1 mit dem Führungsteil 3 eingeschoben werden kann.

Die Langlöcher liegen spiegelsymmetrisch zur Symmetrieebene des Sattels. Die Achsen 16 werden von außen, d. h. nach Aufklappen zweier zu diesem Zweck vorgesehener, sich der Oberflächengestalt des Sattelgrundkörpers 1 anpassender Abdeckungen 22, in die Langlöcher 7a und 7b im Sattelgrundkörper 1 und Bohrungen 15 im eingeschobenen Führungsteil 3 eingeführt.

Das Sattel-Tragteil 2 ist sowohl in der Seitenansicht als auch in der Draufsicht annähernd dreieckförmig. Am vorderen Ende trägt es in einer angeformten Verstärkung 26 eine Bohrung 6b zur Aufnahme der Achse 9 zur Verbindung mit dem Sattelgrundkörper 1 und am breiten Ende in zwei beidseitig angeformten Verstärkungen 27 je eine Bohrung 12 zur Aufnahme der Achsen 13 zur Verbindung mit dem Führungsteil 3, wobei die beiden Bohrungen 12 koaxial zueinander sind und ihre gemeinsame Achse parallel zu der der Bohrung 6b verläuft.

Im hinteren Abschnitt trägt das Sattel-Tragteil auf der dem Sattelgrundkörper zugewandten Oberfläche einen flachen, angeformten Zylinder 11 zur Halterung des unteren Endes der Feder 5, der den gleichen Abstand zur ersten Achse 9 aufweist wie der abgestufte Zylinder 8 am Sattelgrundkörper 1.

Auf der Unterseite des Sattel-Tragteiles 2 begrenzen im hinteren Abschnitt zwei zur Symmetrieebene der Sattelkonstruktion parallele Seitenwangen eine zentrale Ausnehmung 10, in der nach der Montage der Sattelkloben 4 aufgenommen wird. Beide Seitenwangen weisen in zur Symmetrieebene der Sattelkonstruktion spiegelsymmetrischer und zu dieser Ebene paralleler Anordnung je ein Langloch 20 und einen Halte- und Führungsschlitz 21 auf.

Das Führungsteil 3 ist von annähernd U-förmiger Gestalt. An den Enden beider Schenkel des "U", die zueinander parallele äußere Seitenflächen 23 aufweisen, trägt es je eine Bohrung 14, wobei diese beiden Bohrungen zueinander koaxial ausgerichet sind. Die Basis des "U" ist von beiden Außenseiten her jeweils mit einer Bohrung 15 zur Aufnahme der beiden Achsen bzw. Bolzen 16 versehen, wobei auch diese beiden Bohrungen miteinander koaxial sind und ihre Achse parallel zu der der Bohrungen 14 verläuft.

Die Ausnehmung 10 des Sattel-Tragteiles 2 nimmt im montierten Zustand einen Sattelkloben 4 herkömmlicher Bauart aus Stahl auf. Das Befestigungselement des Sattelklobens ist ein stählerner Gewindebolzen 18 mit Mutter, der zwei separate Seitenteile 19 und die Muffe 17 durchstößt, wobei sein Kopf und die Mutter bezüglich der Muffe auf der äußeren Seite der Seitenteile liegen.

Der Gewindebolzen 18 des Sattelklobens durchstößt die beiden Langlöcher 20 in den Seitenwangen der Ausnehmung des Sattel-Tragteiles 2, wobei die dem Gewindebolzen zugeordneten Muttern bezüglich der Muffe außerhalb der Seitenwangen liegen, und je eines der Seitenteile 19 des Sattelklobens jeweils mit einem oberen, abgekanteten Abschnitt längs verschiebbar in je einem der Halte- und Führungsschlitze 21 des Sattel-Mittelteils ruht, wodurch im festgezogenen Zustand des Gewindebolzens die Muffe 17 mit den Seitenteilen 19 des Sattelklobens 4 mit dem Sattel-Tragteil 2 verbunden ist.

Die Schraubenfeder 5 ist eine Stahl-Schraubenfeder mit einer auf das Gewicht der Benutzer und den Einsatzzweck des Fahrrades abgestimmten Kennlinie.

Die Achsen 9, 13 und 16 weisen am einen Ende einen flachen Kopf und am anderen Ende einen kegelstumpfförmigen Kopf und einen Schlitz auf, womit sie jeweils in eine der zugeordneten Bohrungen eingeschoben werden können und sich dann darin selbst arretieren. Bei der Ausführungsform bestehen sie aus PTFE(Teflon).

Der Sattelgrundkörper 1, das Sattel-Tragteil 2 und das Führungsteil 3 bestehen aus Polyurethan, wodurch diese Teile sehr einfach, kostengünstig und umweltschonend herstellbar sind und ihr Gewicht gering gehalten werden kann. Die Herstellung aus Kunststoff wird durch die angegebene Konstruktion, die eine weitgehend gleichmäßige Kräfteverteilung ohne ausgesprochene Konzentrationspunkte gewährleistet, ermöglicht.

Beim gemäß Fig. 1 zusammmengesetzten und auf herkömmliche Weise an der Sattelstütze befestigten Sattel schwingt in Benutzung beim Einfedern der Sattelgrundkörper 1 relativ zum an der Sattelstütze festen Sattel-Tragteil 2 gegen die Federkraft der Schraubenfeder 5 um die Schwenkachse 9.

Dabei werden gleichzeitig die in den Langlöchern 7a und 7b liegenden Achsen 16 in den Langlöchern nach hinten gedrückt, und das Führungsteil 3 schwenkt um die in den Bohrungen 12 und 14 liegenden Achsen 13 nach hinten und unten.

Beim Ausfedern schwenkt umgekehrt infolge der Federkraft der Feder 5 der Sattelgrundkörper um die Achse 9 nach oben, die Achsen 16 gleiten in den Langlöchern 7a und 7b nach vorn und damit schwenkt das Führungsteil 3 nach vorn oben.

Die in den Langlöchern 7a und 7b gleitenden Achsen 16 und der gleitende Kontakt der Seitenflächen 23 des Führungsteiles 3 mit den an ihnen anliegenden vertikalen Wandungen 24 der Stufen im hinteren Teil des Sattelgrundkörpers 1 geben dem Sattel beim Ein- und Ausschwingen Führung und Stabilität und verhindern insbesondere das Auftreten nicht vertikal gerichteter Schwingungskomponenten..

Gemäß einer Weiterbildung der ersten Ausführungsform sind die jeweils zwei Achsen 13 und 16 als jeweils eine durchgehende Achse realisiert, wobei dann im Falle der Achse 16 auch die Bohrung 15 im Führungsteil 3 als durchgehende Bohrung auszubilden ist.

Gemäß einer weiteren Abwandlung der ersten Ausführungsform sind anstelle der Langlöcher 7a und 7b im Sattelgrundkörper 1 einfache Bohrungen 7a und 7b vorgesehen, und die Langlöcher befinden sich stattdessen anstelle der Bohrungen 12 im Sattel-Tragteil 2.

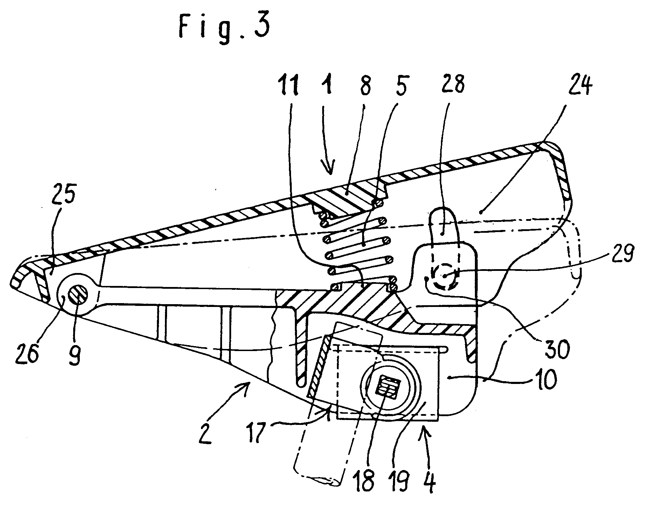

Bei einer zweiten nicht beanspruchten Ausführungsform wird gemäß Fig. 3 auf das Führungsteil 3 und die Achsen 13 und 16 sowie die zu ihrer Aufnahme vorgesehenen Bohrungen verzichtet.

Die Bezeichnung und Funktion der übrigen Teile nach Fig. 3 entspricht der der ersten Ausführungsform nach Fig. 1 und 2. Das Sattel-Tragteil 2 gleitet beim Ein- und Ausfedern mit seinen zur Symmetrieebene der Sattelkonstruktion parallelen Seitenwänden 30 am hinteren Ende zwischen den am Sattelgrundkörper 1 angeordneten seitlichen, zur Symmetrieebene der Sattelkonstruktion parallelen Wandungen 24. Diese Bewegung ist dort zusätzlich durch je eine kreisbogensegmentförmige Führungsbahn 28, in der jeweils ein an der Seitenwand des Sattel-Tragteil 2 angeformter Zapfen 29 gleitet, geführt.

Bei einer Abwandlung dieser Ausführungsform wird auf diese zusätzlichen Führungsbahnen verzichtet.

In Abwandlungen der erläuterten Ausführungsformen sind die eingesetzten Materialien variiert: Der Sattelgrundkörper 1, das Sattel-Mittelteil 2 und/oder das Führungsteil 3 bestehen aus einem anderen Kunststoff als Polyurethan oder aus Leichtmetall, z. B. einer Aluminiumlegierung. Die Achsen 9, 13 und 16 können aus einem anderen hochfesten und selbstschmierenden Kunststoff oder aus Metall bestehen.

In Abwandlung beider Ausführungsformen wird anstelle der Schraubenfeder 5 eine anders geformte Metallfeder oder sogar ein anderer Federwerkstoff eingesetzt, wobei dann die Aufnahmen am Sattelgrundkörper und Sattel-Mittelteil der Gestalt dieser Feder entsprechend zu gestalten oder ggf. auch durch Klebflächen zu ersetzen sind.

## Patentansprüche

1. Sattelkonstruktion mit einem die Sitzfläche bildenden und eine Symmetrieebene aufweisenden Sattelgrundkörper (1) mit einem vorderen Ende und einem hinteren Ende,
einem mit dem Sattelgrundkörper (1) über eine sich im wesentlichen senkrecht zur Symmetrieebene der Sattelkonstruktion erstreckende erste Achse (9) schwenkbar am vorderen Ende des Sattelgrundkörpers verbundenen Sattel-Tragteil, welches mit einem Rahmen verbindbar ist, und
einem in einem Abstand von der ersten Achse zwischen Sattelgrundkörper (1) und Sattel-Tragteil (2) vorgesehenen Druckfederelement (5) zum Vorspannen der Teile gegeneinander,
dadurch gekennzeichnet, daß ein Sattelgrundkörper (1) und Sattel-Tragteil (2) in ihrem jeweils hinteren Abschnitt verbindendes Führungsteil (3) vorgesehen ist, das am Sattel-Tragteil (2) um eine zur ersten Achse (9) parallele zweite Achse bzw. Zapfen (13) schwenkbar befestigt ist und über eine ebenfalls zur ersten Achse (9) parallele dritte Achse bzw. Zapfen (16) in am Sattelgrundkörper vorgesehenen Langlöchern (7a, 7b) schwenkbar und verschiebbar geführt ist.

2. Sattelkonstruktion nach Anspruch 1,
dadurch gekennzeichnet, daß der Sattelgrundkörper am hinteren Ende zwei Seitenwandungen (24), das Führungsteil (3) zwei zu jeweils einer der Seitenwandungen (24) des Sattelgrundkörpers parallele Seitenwandungen (23) sowie zwei weitere Seitenwandungen (31) und das Sattel-Tragteil zwei Seitenwandungen (30) aufweist, von denen jeweils eine parallel zu einer der Seitenwandungen (31) des Führungsteils ist, und daß die Seitenwandungen (24) des Sattelgrundkörpers mit den Seitenwandungen (23) des Führungsteils sowie die Seitenwandungen (31) des Führungsteils mit den Seitenwandungen (30) des Sattel-Tragteils in Flächenkontakt stehen.

3. Sattelkonstruktion nach Anspruch 1 oder 2,
dadurch gekennzeichnet, daß das Führungsteil (3) an dem dem hinteren Ende des Sattel-Tragteiles (2) zugewandten Ende eine Bohrung (14) für die Achse (13) zur Verbindung mit dem Sattel-Tragteil und am entgegengesetzten, dem hinteren Ende des Sattelgrundkörpers (1) zugewandten Ende eine Bohrung (15) für die Achse (16) zur Verbindung mit dem Sattelgrundkörper aufweist.

4. Sattelkonstruktion nach einem der Ansprüche 1 bis 3,
dadurch gekennzeichnet, daß das Sattel-Tragteil (2) eine Ausnehmung (10) für einen Sattelkloben (4) nahe seinem hinteren Ende aufweist.

5. Sattelkonstruktion nach einem der Ansprüche 1 bis 4,
dadurch gekennzeichnet, daß der Sattelgrundkörper (1), das Sattel-Tragteil (2) und das Führungsteil (3) aus Kunststoff hergestellt sind.

## Claims

1. Saddle assembly having a saddle body (1) constituting the seat and having a symmetry plane, which is provided with a front and a rear end,
having a saddle-supporting element adapted to be connected to a frame, which is pivotably connected, by said front end of said saddle body, to said saddle body (1) by a first axis (9) substantially extending normally on said symmetry plane of said saddle assembly, and
having a compression spring element (5) at a distance from said first axis between said saddle body (1) and said saddle-supporting element (2), for biassing said elements against each other,
**characterized in** that a guide element (3) is provided to connect said saddle body (1) and said saddle-supporting element (2) in their respective rear sections, which guide element is attached to said saddle-supporting element (2) so as to pivot about a second axis or pivot (13), respectively, which is parallel to said first axis (9), while it is pivotably and displaceably guided by a third axis or pivot (16) equally parallel to said first axis (9), in elongate holes (7a, 7b) provided on said saddle body, too.

2. Saddle assembly according to Claim 1,
**characterized in** that at its rear end said saddle body comprises two side walls (24), that said guide element (3) comprises two side walls (23) parallel to a respective side wall (24) of said saddle body, and two further side walls (31), and that said saddle-supporting element has two side walls (30) whereof one extends respectively in parallel to one of said side walls (31) of said guide element, and in that said side walls (24) of said saddle body are in surface contact with said side walls (23) of said guide element, and said side walls (31) of said guide element are in surface contact with said side walls (30) of said saddle-supporting element.

3. Saddle assembly according to Claim 1 or 2,
**characterized in** that said guide element (3) has a bore (14) for said axis (13), at its end facing said rear end of said saddle-supporting element, for connection to said saddle-supporting element, and, at its opposite end facing said rear end of said saddle body (1), a bore (15) for the axis (16) for connection to said saddle body.

4. Saddle assembly according to any of Claims 1 to 3,
**characterized in** that said saddle-supporting element (2) is provided with a recess (10) for a saddle block (4) in the vicinity of its rear end.

5. Saddle assembly according to any of Claims 1 to 4,
**characterized in** that saddle body (1), said saddle-supporting element (2) and said guide element are made of a synthetic material.

## Revendications

1. Structure de selle à un corps de selle (1), qui constitue la surface de siège, en présentant un plan de symétrie, et qui est prévu des extrémités avant et arrière,
à un élément porte-selle, apte à être relié à un châssis, qui est raccordé, de façon pivotable à ladite extrémité avant dudit corps de selle, audit corps de selle (1) par un premier axe (9) qui s'étend essentiellement en direction orthogonale audit plan de symétrie de la structure de selle, et
à un élément ressort de compression (5) écarté dudit premier axe entre ledit corps de selle (1) et ledit élément porte-selle (2), afin de mettre lesdits éléments en précontrainte l'un contre l'autre,
**caractérisée en ce** qu'un élément de guidage (3) est prévu à relier ledit corps de selle (1) et ledit élément porte-selle (2) dans leurs parties arrières respectives, lequel élément de guidage est attaché audit élément porte-selle (2) à pivoter autour un deuxième axe ou respectivement pivot (13) parallèle audit premier axe (9), en étant guidé, de façon pivotable et déplacable, par un troisième axe ou respectivement pivot (16), également parallèle audit premier axe (9), dans des trous longitudinaux (7a, 7b) prévus aussi audit corps de selle.

2. Structure de selle selon la revendication 1,
**caractérisée en ce** que ledit corps de selle comprend, à son extrémité arrière, deux parois latérales (24), que ledit élément de guidage (3) comprend deux parois latérales (23) parallèles à une paroi latérale respective (24) dudit corps de selle, ainsi que deux autres parois latérales (31), et que ledit élément porte-selle présente deux parois latérales (30), dont l'une s'étend respectivement en parallèle à une desdites parois latérales (31) dudit élément de guidage, et en ce que lesdites parois latérales (24) dudit corps de selle se trouvent en contact superficiel avec lesdites parois latérales (23) dudit élément de guidage, et lesdites parois latérales (31) dudit élément de guidage se trouvent en contact superficiel avec lesdites parois latérales (30) dudit élément porte-selle.

3. Structure de selle selon la revendication 1 ou 2,
**caractérisée en ce** que ledit élément de guidage (3) présente un alésage (14) pour ledit axe (13), à son extrémité tournée vers ladite extrémité arrière dudit élément porte-selle, pour le raccord audit élément porte-selle, et, a son extrémité opposée, tournée vers l'extrémité arrière dudit corps de selle (1), un alésage (15) pour l'axe (16) pour le raccord audit corps de selle.

4. Structure de selle selon une quelconque des revendications 1 à 3,
**caractérisée en ce** que ledit élément porte-selle (2) est prévu d'un évidement (10) pour une chape de selle (4) proche à son extrémité arrière.

5. Structure de selle selon une quelconque des revendications 1 à 4,
**caractérisée en ce** que ledit corps de selle (1), ledit élément porte-selle (2) et ledit élément de guidage sont faits d'une matière synthétique.
